# EUROPÄISCHE PATENTSCHRIFT

(11) **EP 0 411 418 B1**
(45) Veröffentlichungstag und Bekanntmachung des Hinweises auf die Patenterteilung: **15.02.1995**
(21) Anmeldenummer: 90114013.7
(22) Anmeldetag: 21.07.1990
(51) Int. Cl.: C08K 5/00, C08K 5/11, B01F 17/00

(54) **Stabilisatordispersionen**
Stabilizer dispersions
Dispersions de stabilisateurs

(30) Priorität: 03.08.1989 DE 3925634
(43) Veröffentlichungstag der Anmeldung: 06.02.1991
(73) Patentinhaber: BAYER AG, 51368 Leverkusen (DE)
(72) Erfinder: Eichenauer, Herbert, Dr., D-4047 Dormagen (DE); Piejko, Karl-Erwin, Dr., D-5060 Bergisch-Gladbach 2 (DE); Lindner, Christian, Dr., D-5000 Koeln 80 (DE); Schmidt, Adolf, Dr., D-5000 Koeln 80 (DE); Ott, Karl-Heinz, Dr., D-5090 Leverkusen 1 (DE)

(56) Entgegenhaltungen:
- FR-A- 1 313 738

## Beschreibung

Die Erfindung betrifft Dispersionen von Stabilisatoren für Chemiewerkstoffe in Wasser, die als Hilfsemulgatoren spezielle Umsetzungsprodukte aus Diolen und Carbonsäureanhydriden enthalten. Die Dispersionen zeichnen sich durch einfache Herstellung, Stabilität und gute Wirksamkeit in Chemiewerkstoffen aus.

Chemiewerkstoffe wie Kautschuken und Thermoplasten werden regelmäßig Stabilisatoren, z.B. zur Verbesserung der Thermo- und Bewitterungstabilität bei Gebrauch und Verarbeitung zugefügt. Diese Stabilisatoren können bei der Schmelzcompoundierung oder bereits während der Herstellung oder Aufarbeitung der Polymeren, die den Rohstoff für die Chemiewerkstoffe darstellen, hinzugefügt werden. Fallen die Rohstoffe als Dispersionen an, so kann man diesen Dispersionen von Stabilisatoren zumischen. Die Mischung wird dann zum Chemiewerkstoff aufgearbeitet - z.B. zu einem Pulver oder Granulat. Mögliche Schädigungen der Polymeren bei Isolierung und Aufarbeitung werden so durch die Anwesenheit der Stabilisatoren reduziert.

Die hierfür benötigten Dispersionen der Stabilisatoren (in Wasser) müssen allerdings gewissen Anforderungen genügen; dazu gehören Homogenität, Feinteiligkeit, gutes Aufziehverhalten, Stabilität der Dispersion, hohe Konzentrationen an Wirkstoffen. Um allen Anforderungen zu genügen, müssen bei der Herstellung der Stabilisator-Dispersionen Hilfsstoffe verwendet werden, z.B. Emulgatoren. Brauchbar sind nur solche Emulgatoren, die nicht die Eigenschaften der Chemiewerkstoffe verschlechtern, wohl aber die Stabilisatoren unter Einhaltung der oben genannten Anforderungen emulgieren können.

Es wurde gefunden, daß spezielle Umsetzungsprodukte von Diolen mit Carbonsäureanhydriden zur Herstellung von Dispersionen von Stabilisatoren mit vorteilhaften Eigenschaften geeignet sind.

Gegenstand der Erfindung sind Dispersionen von Stabilisatoren für Chemiewerkstoffe enthaltend Wasser, organische Stabilisatoren für Chemiewerkstoffe und einen Emulgator, der durch Umsetzung von 1 Mol eines cycloaliphatischen Diols der Formel I

HO - M - OH (I)

worin 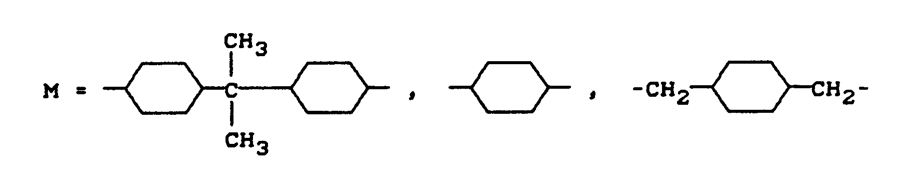 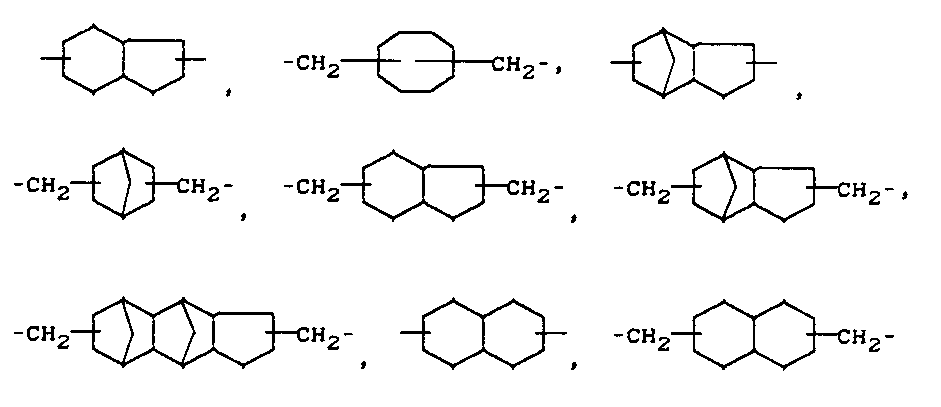
mit 2 Mol Carbonsäureanhydrid der Formeln II, III, IV oder Mischungen daraus 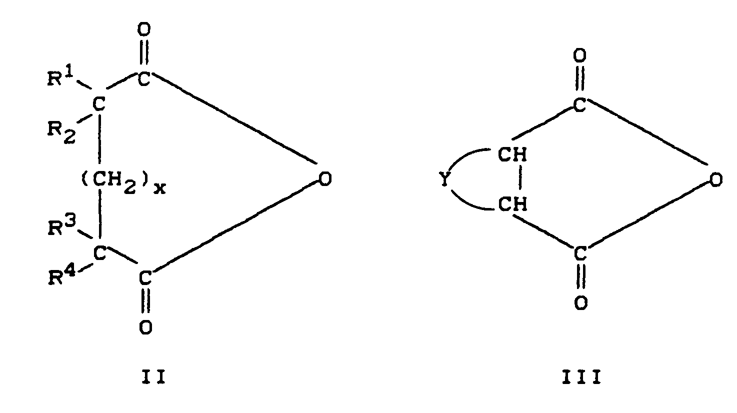 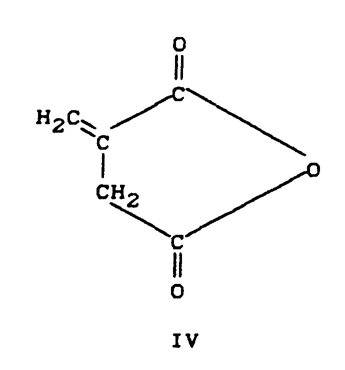
wobei für X = O
R¹, R², R³ und R⁴ Wasserstoff
oder
R¹ und/oder R³ C₁ bis C₃₅-Alkyl oder Alkenyl und die verbleibenden Reste R¹ bis R⁴ Wasserstoff
oder
R¹ und R⁴ zusammen eine chemische Bindung und R² und R³ Wasserstoff
oder
R¹ und R⁴ zusammen eine chemische Bindung und R² und R³ zusammen mit den Kohlenstoffatomen an denen sie stehen, eine o-Phenylengruppe
für x = 1
R¹, R², R³, R⁴ Wasserstoff
bedeuten und 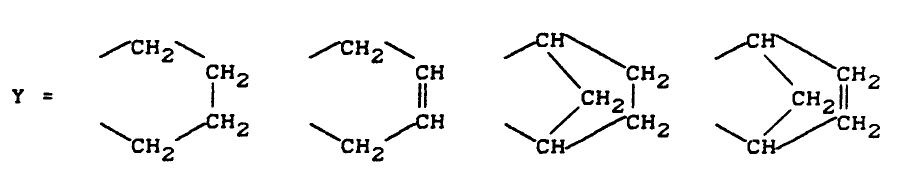
bedeutet,
in der Schmelze bei Temperaturen von 100°C bis 300°C unter Inertgas und anschließende Überführung in Alkalisalze oder Ammoniumsalze erhalten worden ist.

Besonders geeignete Emulgatoren sind Verbindungen der Formel V 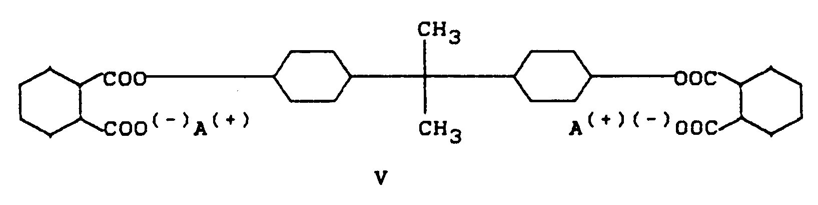
mit A = Alkalimetall, Ammonium und der Formel VI 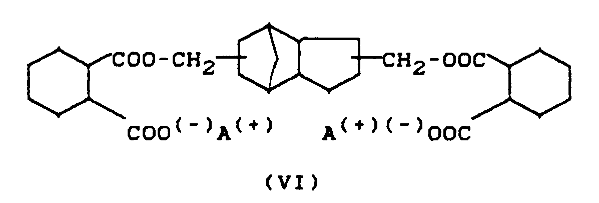
mit A = Alkalimetall, Ammonium.

Die erfindungsgemäßen Emulgatoren werden durch Reaktion eines cycloaliphatischen Diols der Formel I oder einer Mischung aus solchen Diolen mit zwei Mol eines cycloaliphatischen Anhydrids der Formeln II, III, IV oder einer Mischung solcher Anhydride durch Zusammenschmelzen der Bestandteile bei Temperaturen von 100°C bis 300°C, vorzugsweise von 120° bis 220°C, unter Inertgas, vorzugsweise Stickstoff, und anschließende Überführung in Alkalisalze oder Ammoniumsalze durch Auflösung der sauren Reaktionsprodukte in wäßriger Alkalilösung oder wäßriger Ammoniaklösung erhalten.

Beispiele für geeignete Diole sind:
2,2-Bis-(4-hydroxycyclohexyl)-propan
1,4-Cyclohexandiol
1,4-Bis-hydroxymethyl-cyclohexan
Bis-hydroxymethyl-hexahydro-4,7-methanoindan (als "TDC-Diol" handelsüblich, hergestellt durch Hydroformylierung von Dicyclopentadien)
Bis-hydroxymethyl-bicyclo(4,3,0)-nonan
Bis-hydroxymethyl-norbornan
Bis-hydroxymethyl-cyclooctan
Diese Diole sind meist Isomerengemische.

Beispiele für geeignete Anhydride sind:
Hexahydrophthalsäureanhydrid
Tetrahydrophthalsäureanhydrid
5-Norbornen-2,3-dicarbonsäureanhydrid
Norbornandicarbonsäureanhydrid
Maleinsäureanhydrid
Itaconsäureanhydrid
Die beiden letztgenannten Anhydride werden bevorzugt in Kombination mit gesattigten Anhydriden verwendet.

Die beim Zusammenschmelzen ablaufende Reaktion läßt sich wie folgt darstellen: 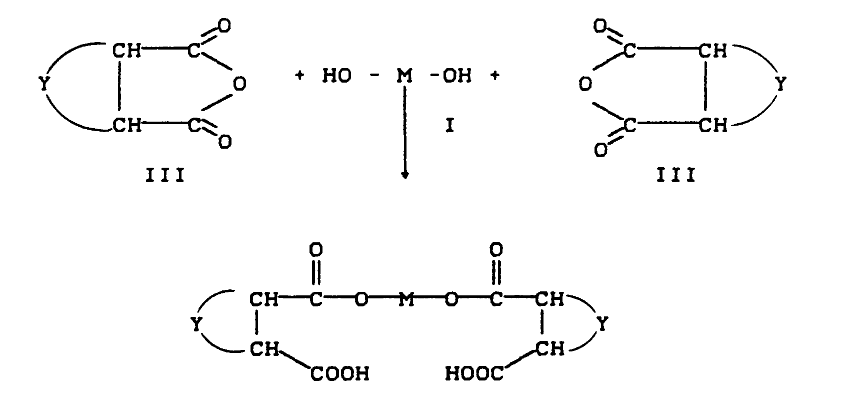
(M und Y definiert wie oben).

Nach Neutralisation mit Alkalihydroxid oder wäßrigem Ammoniak liegen die Umsetzungsprodukte in Form der Salze 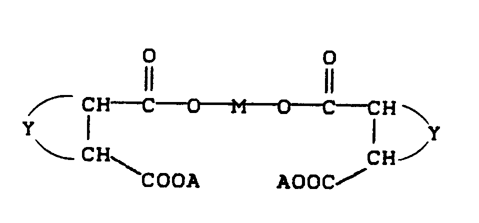
(A = Alkalimetall, vorzugsweise Na, K, Ammonium) vor.

Diese Salze der Umsetzungsprodukte lassen sich wie übliche anionische Emulgatoren einsetzen, insbesondere in Form alkalischer wäßriger Lösungen mit Konzentrationen von 2 - 50 Gew.-%, insbesondere 5 -20 Gew.-%.

Bevorzugte Stabilisatoren für Chemiewerkstoffe in den erfindungsgemäßen Dispersionen sind bekannte phenolische Antioxidantien, Phosphorverbindungen, Stickstoffverbindungen und Schwefelverbindungen.

Beispiele für phenolische Antioxidatien sind:
2,6-Di-t-butyl-4-methylphenol, 2,4,6-Tri-t-butylphenol, 2,2′-Methylen-bis-(4-methyl-6-t-butylphenol), 2,2′-Thio-bis-(4-methyl-6-t-butylphenol), 4,4′-Thio-bis-(3-methyl-6-t-butylphenol, 4,4′-Butyliden-bis-(6-butyl-3-methylphenol), 4,4′-Methylen-bis-(2,6-di-t-butylphenol), 2,2′-Methylen-bis-[4-methyl-6-(1-methylcyclohexyl)phenol], Tetrakis [methylen-3-(3,5-di-t-butyl-4-hydroxyphenyl)propionat]methan, 1,3,5,-Trimethyl-2,4,6-tris(3,5-di-t-butyl-4-hydroxybenzyl)benzol, N,N′-Hexamethylenbis(3,5-di-t-butyl-4-hydroxy-hydrozimtsäureamid), Octadecyl-3-(3,5-di-t-butyl-4-hydroxyphenyl)propionat, 1,3,5-Tris(3,5-di-t-butyl-4-hydroxybenzyl)isocyanurat, 1,1,3-Tris(5-t-butyl-4-hydroxy-2-methylphenyl)buten, 1,3,5-Tris-(3,5-di-t-butyl-4-hydroxybenzyl)mesitylen, Ethylenglykol-bis[3,3- bis(3′-t-butyl-4′-hydroxyphenyl)butyrat], 2,2′-Thodiethyl-bis-(3,5-di-t-butyl-4-hydroxyphenyl)-propionat, Di-(3-t-butyl-4′-hydroxy-5-methylphenyl)dicyclopentadien, 2,2′-methylen-bis-(4-methyl-6-cyclohexylphenol), 1,6-Hexandiol-bis-3-(3,5-di-t-butyl-4-hydroxyphenyl)propionat, 2,4-(n-octylthio)-6-(4-hydroxy-3,5-di-t-butylanilino)-1,3,5-triazin, 3,5-Di-t-butyl-4-hydroxybenzyl-phosphonsäurediethylester, Triethylenglykol-bis-3-(t-butyl-4-hydroxy-5-methylphenyl)propionat.

Beispiele für geeignete Phosphorverbindungen sind: Distearylpentaerythritdiphosphit, Tris-(nonylphenyl)phosphit, Tetrakis-(2,4-di-t-butylphenyl-4,4′-biphenylylendiphosphonit, Tris-(2,4-di-t-butylphenyl)phosphit, Neopentylglykoltriethylenglykoldiphoshit, Diisododecylpentaerythritdiphosphit, Tristearylphosphit, Triphenylphosphit.

Beispiele für Stickstoffverbindungen sind vorzugsweise aromatische Amine wie 4,4′-Di-t-octyldiphenylamin, 4,4′-Di-(α,α-dimethylbenzyl)-diphenylamin, Phenyl-β-naphtylamin, N-Isopropyl-N'-phenyl-p-phenylendiamin, N-Phenyl-2-naphthylamin, Phenyl-2-aminonaphthalin.

Beispiele für Schwefelverbindungen sind β-Thioether von Estern der Propionsäure, höhere Di-Alkyl-β-thiodipropionate, lineare Thiodialkanoatpolyester, Ester der Alkylthiobuttersäureester, phenolische Verbindungen, in denen aromatische Kerne über eine Thioethergruppe verknüpft sind. Bevorzugt sind Thiodipropionate und aromatische Thioether mit Molekulargewichten bis 2000. Schwefelvebindungen sind als Stabilisatoren bekannt (Vgl. z.B. US-P 4 321 191).

Bevorzugt im Sinne der Erfindung sind Kombinationen aus wenigstens zwei, besonders bevorzugt drei verschiedenen Stabilisatoren, z.B. Kombinationen von phenolischen Stabilisatoren mit Schwefelverbindungen, Kombinationen von phenolischen Stabilisatoren mit Phosphorverbindungen.

Ein weiterer Gegenstand der Erfindung sind mit den erfindungsgemäßen Dispersionen von Stabilisatoren hergestellte thermoplastische Formmassen. Als Thermoplaste kommen beispielhaft in Frage Homo- und Copolymerisate von Styrol, α-Methylstyrol, p-Methylstyrol, p-Halogenstyrol, Acrylnitril, Methacrylnitril, Alkylacrylaten, Alkylmethacrylaten, Vinylchlorid, Vinylfluorid, Vinylidenchlorid, Vinylether, Vinylester, Ethylen, Propylen, Butadien, Isopren, Chloropren, Maleinimiden, Maleinsäureanhydrid, Maleinsäureester, Maliensäurehalbester, Acrylsäure, Methacrylsäure, Acrylamid, Methacrylamid; bevorzugt sind Homo- und Copolymerisste (einschließlich Pfropfpolymerisate) von Styrol, α-Methylstyrol, Acrylnitril, C₁-C₈-Alkylacrylaten, C₂-C₆-Alkylmethacrylaten, Butadien oder Isopren: besonders bevorzugt sind ABS-Polymerisate, also Acrylnitril-Butadien-Styrol-Co- und Pfropfpolymerisate.

Stabilisierte Thermoplasten können durch Mischen einer Polymerdispersion mit der Stabilisatordispersion hergestellt werden. Vor der Aufarbeitung der Dispersionsmischung kann diese noch bis zu 24 Stunden in Bewegung gehalten werden (z.B. gerührt werden) um das Aufziehen der Stabilisatoren auf die Polymerteilchen zu fördern. Ist der Thermoplast selbst eine Mischung (z.B. ein Styrol-Acrylnitril-Copolymerisat im Gemisch mit einem Pfropfpolymerisat von Styrol und Acrylnitril auf Polybutadien, d.h. ein ABS-Kunststoff), dann kann man den Stabilisator auch in einen Bestandteil der Thermoplasten einarbeiten und dann den zweiten zumischen, z.B. eine Dispersion des einen Bestandteils mit der Dispersion des Stabilisators mischen, aufarbeiten und den zweiten Bestandteil durch Schmelzcompoundieren zufügen.

Die erfindungsgemäßen Stabilisatordispersionen können in an sich bekannter Weise hergestellt werden, bevorzugt wie folgt:
Die Stabilisatoren werden geschmolzen (unter Rühren, maximale Temperatur 100°C), anschließend wird eine wäßrige warme Emulgatorlösung zugefügt und gerührt, bis sich eine stabile Dispersion gebildet hat. Niedrigschmelzende Stabilisatoren können auch direkt in eine heiße wäßrige Emulgatorlösung eingebracht werden. Zum Rühren und Dispergieren benutzt man übliche gut wirksame Rühraggregate (z.B. schnell laufende Rührer) oder Verdüsungsaggregate, die aufgrund hoher Scherverhältnisse besonders wirksam dispergieren. Die Emulgatoren werden bevorzugt in Mengen bis zu 15 Gew.-%, insbesondere bis zu 10 Gew.-%, bezogen auf die zu dispergierenden Stabilisatoren verwendet. Die Wassermengen können so gewählt werden, daß Dispersionen mit einer Stabilisatorkonzentration von bis zu 60 Gew.-% entstehen. Es kann nützlich sein, den Dispersionen noch Hilfsstoffe wie Salze oder Lösungsmittel zuzusetzen, wenn man die Schmelzpunkte der Stabilisatoren erniedrigen oder eine besondere Feinteiligkeit der Dispersionen erreichen will.

Die erfindungsgemäßen Dispersionen sind wenig bis leicht viskos und besitzen gute Lagerstabilität und Homogenität. Sie können leicht mit Thermoplastdispersionen gemischt werden; die Stabilisatordispersion koaguliert nicht vorzeitig. Die erfindungsgemäßen Thermoplaste zeichnen sich durch verbesserte Alterungsbeständigkeit und geringeres Fogging aus; die Verarbeitbarkeit wird nicht verschlechtert.

### Beispiele

### Eingesetzte Emulgatoren:

- A:: Bis-Na-Salz des Umsetzungsproduktes aus 1 Mol Perhydrobisphenol A und 2 Mol Hexahydrophthalsäureanhydrid
- B:: Na-Oleat
- C:: Polyethoxyliertes Nonylphenol

### I) Herstellung der Stabilisatordispersionen

I 1) 100 Gew.-Teile Octadecyl-3-(3,5-di-tert.-butyl-4-hydroxyphenyl)-propionat (Irganox 1076 der Ciba-Geigy) werden zusammen mit 10 Gew.-Teilen Emulgator B bei 60° - 65°C aufgeschmolzen und unter kräftigem Rühren langsam in 90 Gew.-Teile Wasser von 60° - 65°C, das eine stöchiometrische Menge Natriumhydroxid (1,44 g, 98,8 %ig) enthält, eindosiert. Nach 5 Minuten wird die entstandene Emulsion, ohne das Rühren zu unterbrechen, auf Zimmertemperatur abgekühlt. Die Emulsion enthält 50 Gew.-% Wirkstoff.
   Nach 5 Stunden beginnt eine Trennung in wäßrige Phase und Feststoff.
I 2) Zu einer Lösung aus 1.25 Gew.-Teilen des Emulgators A, 5.5 Gew.-Teilen Natriumhydroxid (4 %ig) und 43,25 Gew.-Teilen Wasser, die auf 80° - 90°C erhitzt wurde, werden unter kräftigem Rühren 50 Gew.-Teile Octadecyl-3-(3,5-di-tert.-butyl-4-hydroxyphenyl)-propionat (Irganox 1076 der Ciby-Geigy) gegeben. Nach 5 minütigem Rühren wird die entstandene Emulsion ohne Unterbrechung des Rührens auf Zimmertemperatur abgekühlt. Die resultierende Emulsion enthält 50 Gew.-% Wirkstoff.
   Separation der Emulsion in wäßrige Phase und Feststoff ist auch nach 3 Wochen nicht festzustellen.
I 3) Zu einer auf 70° - 80°C erwärmten Lösung von 2,5 Gew.-Teilen des Emulgators C in 25 Gew.-Teilen Wasser wird unter Rühren ein Gemisch aus 16,1 Gew.-Teilen Dilaurylthiodipropionat (Irganox PS 800 der Ciba-Geigy), 9,1 Gew.-Teilen 2,6-Di-tert.-butyl-4-methylphenol und 2,3 Gew.-Teilen 2,2′-Methylen-bis-(4-methyl-6-cyclohexylphenol) gegeben. Dann wird weitere 30 Minuten bei 70°C - 80°C gerührt, wonach unter Rühren auf Zimmertemperatur abgekühlt wird. Die Emulsion enthält 50 Gew.-% Wirkstoff.
   Eine Separation der Emulsion in wäßrige Phase und Festoff ist auch nach 3 Wochen nicht festzustellen.
I 4) Zu einer Lösung auf 1,5 Gew.-Teilen des Emulgators A, 6,6 Gew.-Teilen Natriumhydroxid (4 %ig) und 32,9 Gew.-Teilen Wasser, die auf 80°-90°C erhitzt wurde, wird unter kräftigem Rühren ein Gemisch aus 29,3 Gew.-Teilen Dilaurylthiodipropionat (Irganox PS 800 der Ciba-Geigy), 16,5 Gew.-Teilen 2,6-Di-tert.-butyl-4-methylphenol und 4,2 Gew.-Teilen 2,2′-Methylen-bis(4-methyl-6-cyclohexylphenol) gegeben, wonach weitere 30 Minuten bei 80° - 85°C gerührt wird. Danach wird unter Rühren auf Zimmertemperatur abgekühlt.
   Die Emulsion enthält 50 Gew.-% Wirkstoff. Separation in wäßrige Phase und Feststoff ist auch nach 3 Wochen nicht festzustellen.

### II) Eingesetzte Polymerisatemulsionen

II 1)
a) Emulsion eines Styrol-Acrylnitril-Copolymerisates [SAN], hergestellt durch radikalische Emulsionspolymerisation, einer Mischung von 72 Gew.-% Styrol und 28 Gew.-% Acrylnitril mit Na-Salz der disproportionierten Abietinsäure als Emulgator: Staudinger-Index [η] des SAN-Harzes: 0,75 in Dimethylformamid bei 23°C.
b) Emulsion eines Pfropfpolymerisates von Styrol und Acrylnitril auf einen grobteiligen, teilchenförmigen vernetzten Butylacrylatkautschuk eines mittleren Teilchendurchmessers (d₅₀) von 0,5 »m, hergestellt durch radikalische Emulsionspfropfpolymerisation einer Styrol-Acrylnitril (72/28)-Mischung in Gegenwart eines Acrylatkautschuklatex; Zusammensetzung des Pfropfpolymerisats: 60 Gew.-% Acrylatkautschuk, 40 Gew.-% Styrol-Acrylnitril-Copolymerisat.

Die Emulsionen a) und b) werden im Gewichts-Verhältnis a : b = 1 : 2 gemischt.
II 2) Emulsion eines Pfropfpolymerisates von Styrol und Acrylnitril auf einen grobteiligen, teilchenförmigen vernetzten Butadienkautschuk eines mittleren Teilchendruchmessers (d₅₀) von 0,4 »m, hergestellt durch radikalische Emulsionspfropfpolymersation einer Styrol-Acrylnitril (72/28)-Mischung in Gegenwart eines Polybutadienlatex; Zusammensetzung des Pfropfpolymerisates: 50 Gew.-% Butadienkautschuk, 50 Gew.-% Styrol-Acrylnitril-Copolymerisat.
Die Emulsionen II 1.a) und II 2) werden im Gew.-Verhältnis II 1.a) : II 2) = 6 : 4 gemischt.
III) Die Emulsionen II werden mit den Stabilisatoremulsionen I gemischt; wobei auf 100 Gew.-Teile Polymerisat 1,2 Gew.-Teile Stabilisator eingesetzt werden.
Nach Vermischung der Dispersionen bei Zimmertemperatur werden die Mischungen 3 Stunden gerührt.
Anschließend wird durch Koagulation mit MgSO₄-Lösung im Falle des Produktes II 1) bei einem pH von 8 - 10, im Falle des Produktes II 2) bei einem pH von 4 - 6 und übliche Aufarbeitung das Polymerisat als Pulver isoliert, gewaschen und getrocknet.
Tabelle 1 zeigt die hergestellten Kombinationen:

**Tabelle 1**

| Nr. | Polymerisat nach Beispiel | | Stabilisator nach Beispiel | | | |
|---|---|---|---|---|---|---|
| | II 1) | II 2) | I 1 | I 2 | I 3 | I 4 |
| 1 | X | | X | | | |
| 2 | X | | | X | | |
| 3 | | X | | | X | |
| 4 | | X | | | | X |

IV) Eigenschaften der Polymerisate
Foggingeigenschaften der Massen III 1, III 2 (Window-Fogging-Test (3 h/130°C) nach DIN 75201)

| | |
|---|---|
| III 1 | 58 Glanz-Wert in % |
| III 2 | 93 Glanz-Wert in % |

Die Polymerisate III werden mit 0,2 Gew.-Teilen Pentaerythrittetrastearat auf einer Walze innerhalb von 15 min. bei 185°C compoundiert.

Aus den Compounds werden danach Platten einer Dicke von 4 mm durch Pressen bei 190°C in 10 min. hergestellt.

Der Rohton der resultierenden Platten wurde anschließend visuell beurteilt.

| Produkt | Verfärbung ⁺⁾ |
|---|---|
| III 1 | + |
| III 2 | ++ |
| III 3 | - |
| III 4 | ++ |

| | |
|---|---|
| ⁺⁾ ++ praktisch keine Verfärbung + geringe Verfärbung - deutliche Verfärbung | |

## Patentansprüche

1. Dispersionen von Stabilisatoren für Chemiewerkstoffe enthaltend Wasser, wenigstens einen organischen Stabilisator für Chemiewerkstoffe und einen Emulgator, der durch Umsetzung von 1 Mol eines cycloaliphatischen Diols der Formel I
HO - M - OH (I)
worin 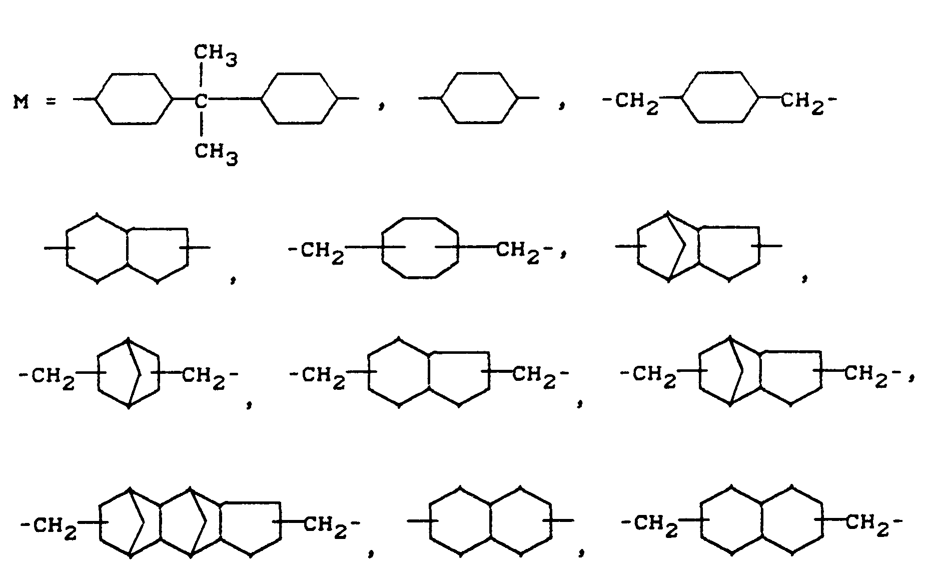 mit 2 Mol Carbonsäureanhydrid der Formeln II, III, IV oder Mischungen daraus 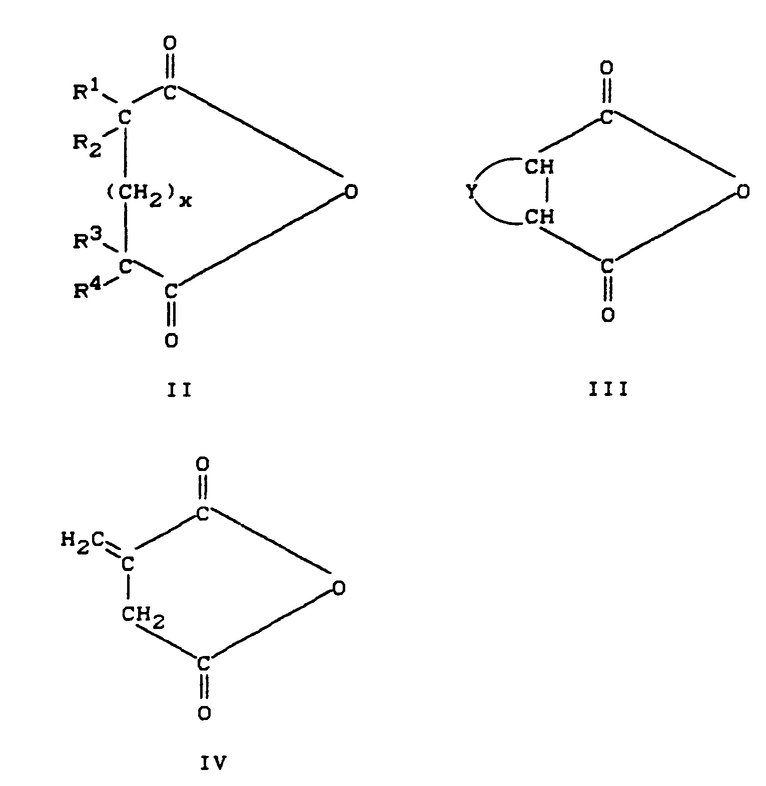 wobei für X = O
R¹, R², R³ und R⁴ Wasserstoff
oder
R¹ und/oder R³ C₁ bis C₃₅-Alkyl oder Alkenyl und die verbleibenden Reste R¹ bis R⁴ Wasserstoff
oder
R¹ und R⁴ zusammen eine chemische Bindung und R² und R³ Wasserstoff
oder
R¹ und R⁴ zusammen eine chemische Bindung und R² und R³ zusammen mit den Kohlenstoffatomen an denen sie stehen, eine o-Phenylengruppe
für x = 1
R¹, R², R³, R⁴ Wasserstoff
bedeuten und 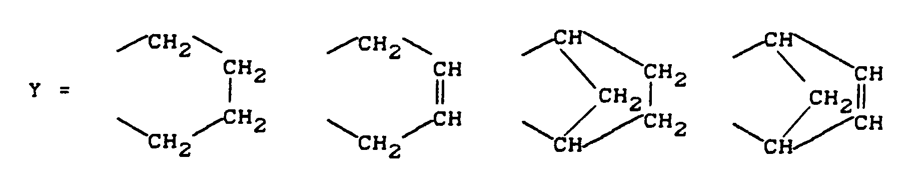 bedeutet,
in der Schmelze bei Temperaturen von 100°C bis 300°C unter Inertgas und anschließende Überführung in Alkalisalze oder Ammoniumsalze erhalten worden ist.

2. Stabilisatordispersionen nach Anspruch 1, die als Stabilisatoren phenolische Antioxidantien, Phosphorverbindungen, Stickstoffverbindungen oder Schwefelverbindungen enthalten.

3. Stabilisierte thermoplastische Formmassen, die mit Dispersionen gemäß Anspruch 1 hergestellt sind.

## Claims

1. Dispersions of stabilizers for plastics containing water, at least one organic stabilizer for plastics and an emulsifier which has been obtained by reaction of 1 mol of a cycloaliphatic diol corresponding to formula I:
HO - M - OH (I)
in which 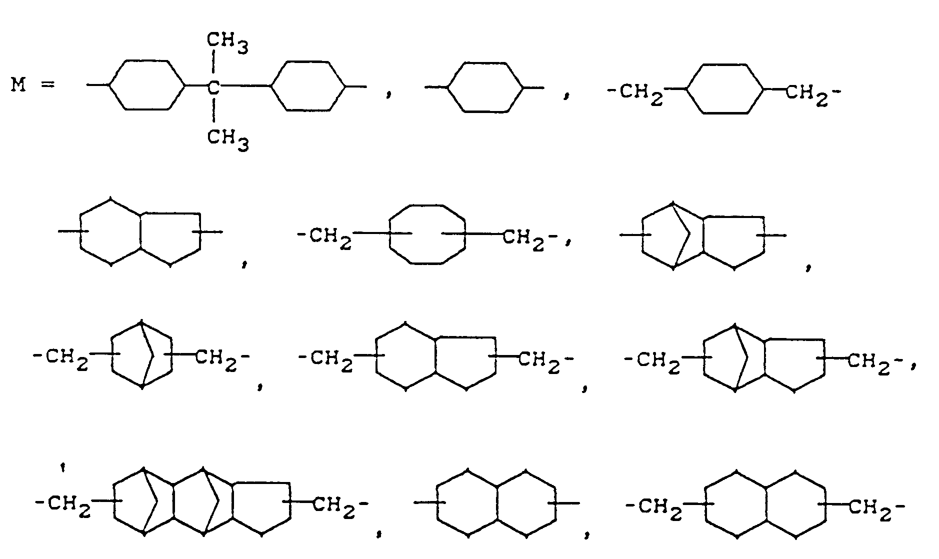 with 2 mols of carboxylic anhydride corresponding to formulae II, III, IV or mixtures thereof: 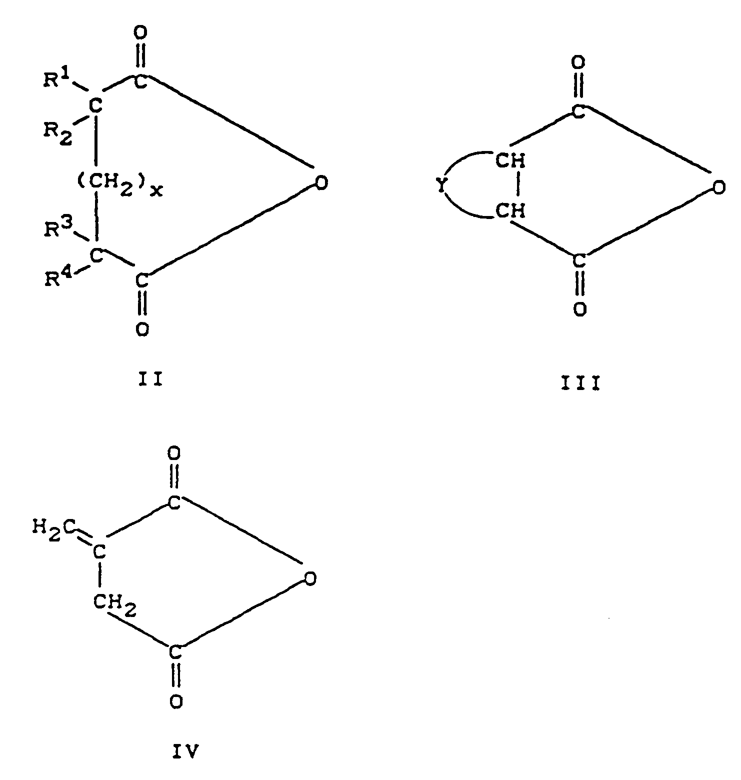 for X = O
R¹, R², R³ and R⁴ represent hydrogen
or
R¹ and/or R³ represent C₁₋₃₅ alkyl or alkenyl and the remaining substituents R¹ to R₄ are hydrogen
or
R¹ and R⁴ together form a chemical bond and R² and R³ are hydrogen
or
R² and R⁴ together form a chemical bond and R² and R³ together with the carbon atoms where they are positioned form an o-phenylene group;
for x = 1,
R¹, R², R³ and R⁴ represent hydrogen and 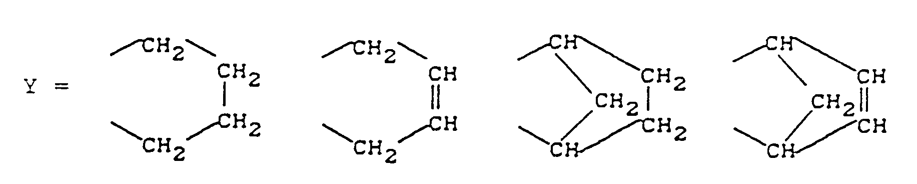 in the melt at temperatures of 100 to 300°C in an inert gas atmosphere and subsequent conversion into alkali metal salts or ammonium salts.

2. Stabilizer dispersions as claimed in claim 1 which contain phenolic antioxidants, phosphorus compounds, nitrogen compounds or sulfur compounds as stabilizers.

3. Stabilized thermoplastic moulding compounds produced with the dispersions claimed in claim 1.

## Revendications

1. Dispersions de stabilisants pour matériaux chimiques, ces dispersions contenant de l'eau, au moins un stabilisant organique pour matériaux chimiques et un agent émulsionnant qui a été obtenu par réaction à l'état fondu à des températures de 100 à 300°C en atmosphère de gaz inerte d'une mole de diol cycloaliphatique de formule I :
HO - M - OH (I)
dans laquelle 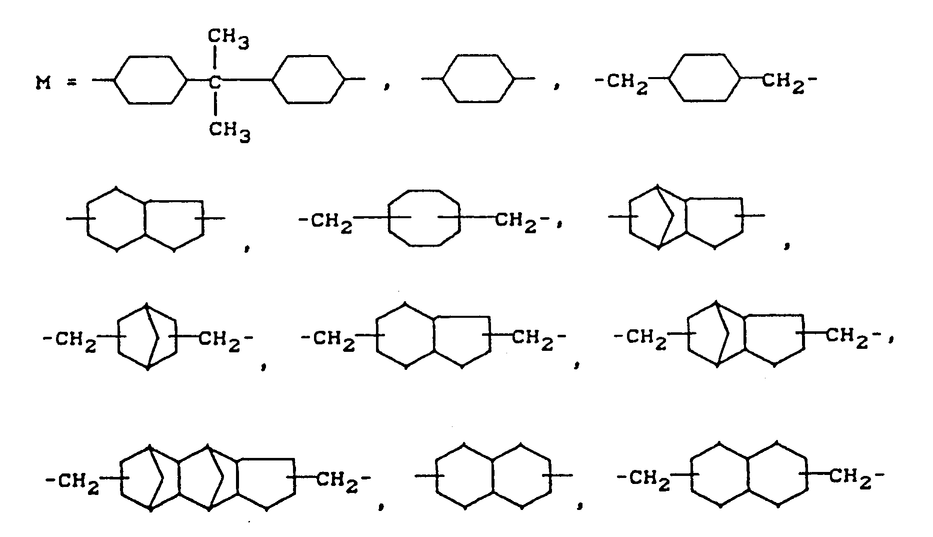 avec deux moles d'un anhydride d'acide carboxylique de formule II, III ou IV ou d'un mélange de tels anhydrides : 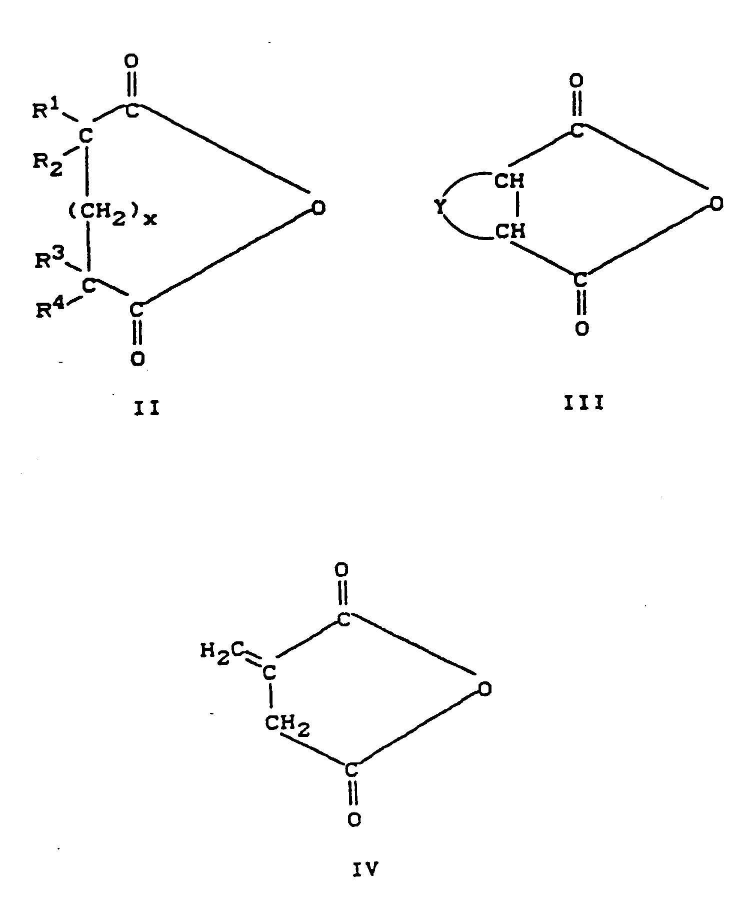 dans lesquels, pour x = 0,
R¹, R², R³ et R⁴ représentent l'hydrogène
ou bien
R¹ et/ou R³ représentent des groupes alkyles en C₁-C₃₅ ou alcényles et les autres symboles, parmi R¹ à R⁴, représentent l'hydrogène
ou bien
R¹ et R⁴ représentent ensemble une liaison chimique et R² et R³ l'hydrogène
ou bien
R¹ et R⁴ représentent ensemble une liaison chimique et R² et R³ forment ensemble et avec les atomes de carbone auxquels ils sont reliés un groupe o-phénylène,
pour x = 1
R¹, R², R³, R⁴ représentent l'hydrogène et 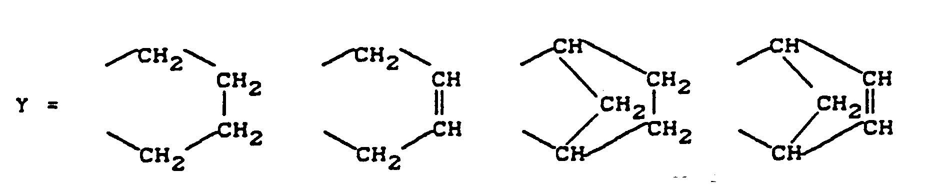 en faisant suivre de la conversion en sels alcalins ou d'ammonium.

2. Dispersions de stabilisants selon revendication 1 contenant, en tant que stabilisants, des antioxydants phénoliques, des dérivés du phosphore, des dérivés de l'azote ou des dérivés du soufre.

3. Matières à mouler thermoplastiques stabilisées, préparées avec des dispersions selon revendication 1.
